# EUROPEAN PATENT SPECIFICATION

(11) **EP 3 401 176 B1**
(45) Date of publication and mention of the grant of the patent: **11.12.2019**
(21) Application number: 18171683.8
(22) Date of filing: 10.05.2018
(51) Int. Cl.: B60T 13/14

(54) **DEVICE FOR CONTROLLING THE BRAKING OF A TRAILER**
GERÄT ZUM KONTROLLIEREN DER BREMSEN EINES ANHÄNGERS
ENGIN POUT CONTRÔLLER LES FREINS D'UN REMORQUE

(30) Priority: 12.05.2017 IT 201700051943
(43) Date of publication of application: 14.11.2018
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 1 800 983
- EP-A1- 3 103 691
- EP-A2- 1 036 718
- US-A1- 2007 102 996

## Description

The present invention relates to a device for controlling the braking of a trailer as the one shown in prior art document US 2007 102 996 A1.

It is known that in the case of a trailer towed by a prime mover, their braking systems are operationally connected in such a way that the braking of the prime mover by the operator also causes the braking of the towed trailer.

The braking system of the trailer is therefore driven by the braking system of the prime mover in order to synchronize the braking forces acting on these. Consequently, when the operator operates the brake pedal of the prime mover, he/she intervenes on the wheels of the prime mover and, by means of a braking valve (called brake-trailer valve), also on the braking system of the trailer.

As is known, to date, towing vehicles are connected to their trailers by a connection device comprising a pair of male couplings adapted to insert themselves inside a pair of relative female couplings associated with the trailer. In particular, the female couplings can be connected to a control line adapted to feed the braking system of the trailer and to an additional line adapted to deactivate the automatic and/or parking brake of the trailer itself respectively. Under emergency situations, the additional line must be suitably connected to a discharge tank in order to allow the activation of the automatic and/or parking brake of the trailer and, therefore, the braking of same.

Such connection device therefore makes it possible to place in communication the braking system of the towing vehicle with that of the trailer in such a way that the braking of the towing vehicle operated by the operator also causes the braking of the towed trailer.

The braking system of the trailer is therefore piloted by the braking system of the prime mover in order to synchronize the braking forces acting on these.

The devices for controlling the braking of a trailer of known type generally comprise a main line and a secondary line connectable to a respective source of a work fluid, a discharge line of the work fluid, a first line connectable to the braking system of the trailer (by means of the above-mentioned control line) and a second line connectable to the automatic and/or parking brake of the trailer (by means of the above-mentioned additional line).

In the case of small prime movers, for example prime movers equipped with a supply pump having a flow rate of less than 18-19 liters/min, only the main line is generally provided for the supply of the work fluid, and between this, the first line and the second line are interposed first and second valve means, where the first valve means are activatable to place the first line in communication with the main line or with the discharge line, and the second valve means are activatable to place the second line in communication with the main line or the discharge line.

These devices of known type do have several drawbacks.

In particular, in the case of small prime movers, the pump that sends the work fluid along the supply line may not be able to manage a flow rate big enough to supply both the first line and the second line at the same time.

This may lead to a delay in the activation of the service brake, an advanced activation or delayed deactivation of the automatic and/or parking brake of the trailer following the connection between the male couplings and the female couplings and, therefore, lack of synchronization with the action of the towing vehicle.

The main aim of the present invention is to provide a device for controlling the braking of a trailer which allows getting a prompt response both from the service braking and from the automatic and/or parking braking of the trailer, following the connection between the male couplings associated with the towing vehicle and the corresponding female couplings associated with the trailer, even when the supply pump of the work fluid is not able to deliver the flow rate required to supply both the control line and the additional line. Within this aim, one object of the present invention is to allow the fast deactivation of the automatic and/or parking braking of the trailer following the connection with the relevant towing vehicle.

Another object of the present invention is to provide a device for controlling the braking of a trailer which allows overcoming the aforementioned drawbacks of the prior art within the scope of a simple, rational, easy, efficient to use and cost-effective solution.

The aforementioned objects are achieved by the present device for controlling the braking of a trailer, according to claim 1.

Other characteristics and advantages of the present invention will become more evident from the description of a preferred, but not exclusive, embodiment of a device for controlling the braking of a trailer, illustrated by way of an indicative, but non-limiting example, in the attached drawings in which:

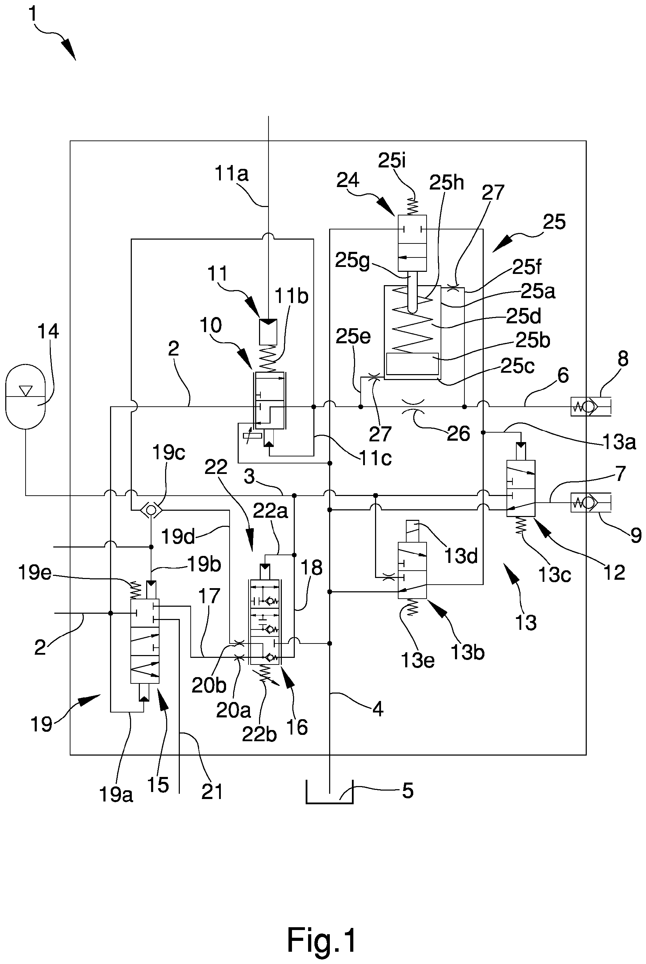

Figure 1 is the hydraulic diagram of a device for controlling the braking of a trailer according to the invention in a first embodiment;
Figure 2 is the hydraulic diagram of a device for controlling the braking of a trailer according to the invention in a second embodiment.

With particular reference to these illustrations, reference numeral 1 globally indicates a device for controlling the braking of a trailer.

The device 1 comprises at least one main line 2 connectable to a source of a work fluid at a first pressure, e.g. of the type of a positive displacement pump, at least a secondary line 3 separated from the main line 2, at least one discharge line 4 of the work fluid connectable to a discharge tank 5, at least a first line 6 connectable to the braking system of the trailer and at least a second line 7 connectable to the automatic and/or parking brake of the trailer.

More specifically, the first line 6 is connected to a first male coupling 8 of the towing vehicle, and the second line 7 is connected to a second male coupling 9 of the towing vehicle. The first and the second male couplings 8 and 9 are connectable to respective female couplings (not shown in the illustrations), in turn connectable to the trailer, so as to place the first line 6 in communication with the control line of the trailer, to convey the work fluid to the service braking system of the trailer, and the second line 7 with the additional line of the trailer, to convey the work fluid to the control device of the parking and/or automatic brake of the trailer itself for its deactivation.

The device 1 then comprises first valve means 10 operable between a home position, in which the first line 6 is placed in communication with the discharge line 4, and at least one braking position, in which the first line 6 is placed in communication with the main line 2, and first piloting means 11 of the first valve means 10. The first piloting means 11 comprise at least a first piloting channel 11a connectable to the braking system of a towing vehicle and actuating on the first valve means 10 to displace them from the home position to the braking position. In the embodiment shown in the illustrations, the first piloting means 11 also comprise first elastic means 11b, which operate on the first valve means 10 in a concordant direction to the first piloting channel 11a, and a counteracting channel 11c communicating with the first line 6 and operating on the first valve means 10 from the opposite side with respect to the first piloting channel 11a.

The device 1 also comprises second valve means 12 operable between a normal operating position, in which the second line 7 is placed in communication with the secondary line 3, and an emergency position, in which the second line 7 is placed in communication with the discharge line 4.

Conveniently, second piloting means 13 of the second valve means 12 are provided. The second piloting means 13 comprise at least a second piloting channel 13a, adapted to interact with the second valve means 12 to displace them from the emergency position to the normal operating position, and at least one piloting valve 13b which can be commanded between an inactive position, in which it places the second piloting channel 13a in communication with the discharge line 4, and an active position, in which it places the second piloting channel 13a in communication with the secondary line 3.

The second piloting channel 13a operates on the second valve means 12 counteracting the second elastic means 13c.

The second valve means 12 are therefore adapted to displace from the emergency position to the normal operating position as a result of the displacement of the piloting valve 13b from the inactive position to the active position, this causing a corresponding increase in pressure along the second piloting channel 13a.

In turn the piloting valve 13b is commanded by an electromagnet 13d which counteracts further elastic means 13e which are adapted to keep the piloting valve itself in the inactive position until the electromagnet 13d is commanded.

According to the invention, the device 1 comprises at least one accumulator 14 of the work fluid connected to the secondary line 3, at least third and fourth valve means 15 and 16, arranged in sequence with each other and interposed between the main line 2 and the secondary line 3, where between the third and fourth valve means 15 and 16 is interposed at least one intermediate line 17. The third valve means 15 are operable between a home position, in which the main line 2 is isolated from the intermediate line 17, and at least a first priority position, in which the main line 2 is placed in communication with the intermediate line 17, and the fourth valve means 16 are operable between a recharging position, in which the intermediate line 17 is placed in communication with the secondary line 3 for enabling the accumulator 14 to be recharged, and a stop position, in which the intermediate line 17 is isolated from the secondary line 3.

More in detail, a recharging line 18 is provided between the fourth valve means 16 and the secondary line 3. The intermediate line 17 is therefore placed in communication with the recharging line 18 when the fourth valve means 16 are in the recharging position.

Therefore, when the third and the fourth valve means 15 and 16 are in the first priority position and in the recharging position respectively, the main line 2 is placed in communication with the secondary line 3 and, through it, with the accumulator 14. In this operating condition the main line 2 is therefore able to recharge the accumulator 14.

Advantageously, the device 1 comprises third piloting means 19 of the third valve means 15. The third piloting means 19 comprise at least a third piloting channel 19a, communicating with the main line 2 and acting on the third valve means 15 to displace them from the home position to the first priority position, and at least one load sensing channel 19b, which counteracts the third piloting channel 19a.

More particularly, the load sensing channel 19b is connectable, e.g. through a so-called flip flop 19c, to the line having higher pressure between the first line 6 and a further piloting line 19d, which is communicating with the intermediate line 17 when the fourth valve means 16 are in the recharging position and with the discharge line 4 when the fourth valve means 16 are in the stop position. Along the intermediate line 17 is arranged at least one orifice 20a which is adapted to limit the flow of the work fluid to the accumulator 14.

Preferably, even along at least one of the further piloting line 19d and the load sensing channel 19b, an orifice 20b is arranged which is adapted to dampen the vibrations during the flow of the work fluid.

More in detail, in the recharging position, the further piloting line 19d is communicating with the intermediate line 17, in turn communicating with the recharging line 18, while in the stop position, the intermediate line 17 is closed and the further piloting line 19d is placed in communication with the discharge line 4 and with the recharging line 18.

As can be seen from the illustrations, the fourth valve means 16 also have an intermediate position between the recharging position and the stop position, in which the intermediate line 17 is placed in communication with the recharging line 18, so as to allow the recharge of the accumulator 14 if there is enough pressure along the intermediate line 17, and the further piloting line 19d is placed in communication with the discharge line 4 and is isolated from the intermediate line 17.

In the embodiment shown in the illustrations, the load sensing channel 19b operates on the third valve means 15 in conjunction with the third elastic means 19e.

Preferably, the third valve means 15 also have a second priority position, subsequent to the first priority position away from the home position, in which the main line 2 is placed in communication with the intermediate line 17 and with a service line 21 connectable to a further user point.

Conveniently, the device 1 also comprises fourth piloting means 22 of the fourth valve means 16. The fourth piloting means 22 comprise at least a fourth piloting channel 22a communicating with the secondary line 3 and adapted to push the fourth valve means 16 to displace them from the recharging position to the stop position. More in detail, the fourth piloting channel 22a is communicating with the accumulator 14, e.g. by means of the recharging line 18. The fourth piloting means 22 also comprise fourth elastic means 22b which operate on the fourth valve means 16 counteracting the fourth piloting channel 22a.

The device 1 also comprises emergency valve means 24 interposed between the second piloting channel 13a and the discharge line 4, which are activatable between an inactive position, in which they isolate the second piloting channel 13a from the discharge line 4, and an active position, in which they place the second piloting channel 13a in communication with the discharge line 4. Emergency piloting means 25 are also provided which are connected in a fluid operated manner to the first line 6. In the embodiment shown in the illustrations, the emergency piloting means 25 comprise at least a fluid operated cylinder 25a inside which is housed sliding at least a thrust element 25b on which operate, from opposite sides, a first chamber 25c and a second chamber 25d communicating with the first line 6. More in particular, along the first line 6 is arranged a bottleneck 26 and the emergency piloting means 25 comprise at least a first supply channel 25e for supplying the first chamber 25c and at least a second supply channel 25f for supplying the second chamber 25d, where the first and second channels 25e and 25f are placed in communication with the first line 6 upstream and downstream of the bottleneck 26 respectively. The terms "upstream" and "downstream" are used here to refer to the direction of forward movement of the work fluid along the first line 6, i.e. from the supply source towards the braking system of the trailer.

Along the first and the second channels 25e and 25f are preferably arranged relative bottlenecks 27.

The emergency piloting means 25 then comprise at least one operating element 25g, operatively connected to the emergency valve means 24 to push them from the inactive position to the active position, which is adapted to interact with the thrust element 25b following the pressure increase in the first chamber 25c with respect to the second chamber 25d. The thrust element 25b then moves towards the operating element 25g following the occurrence of a pressure difference between the first and the second channel 25e and 25f, in favor of the first, e.g., due to a leak along the first line 6. Suitably, inside the second chamber 25d elastic means 25h are housed adapted to counteract the displacement of the thrust element 25b towards the operating element 25g.

The emergency piloting means 25 also comprise fifth elastic means 25i which operate on the emergency valve means 24 counteracting the operating element 25g.

The emergency piloting means 25 are therefore adapted to allow the operation of the automatic and/or parking brake of the trailer under emergency conditions, e.g., following a leak along the control line of the trailer, including in the case of the piloting valve 13b being in the active position.

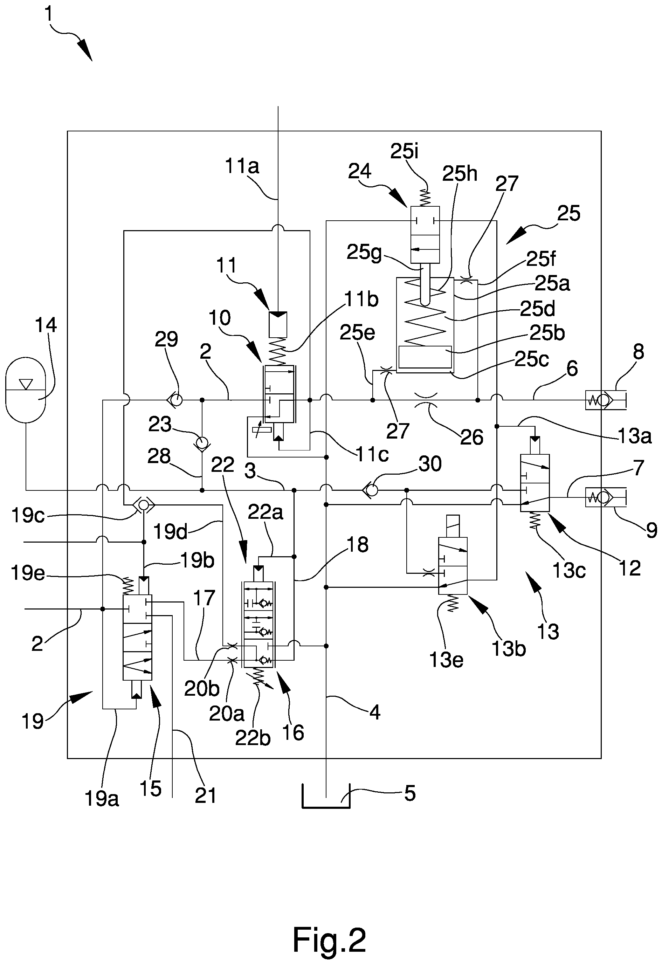

In the second embodiment shown in Figure 2, the device 1 comprises at least one connecting channel 28 interposed between the main line 2 and the secondary line 3, so as to allow the flow of the work fluid from the accumulator 14 to the first line 6 and, therefore, a rapid activation of the service braking of the trailer also in the case of towing vehicles provided with small-sized pumps. Preferably, in this second embodiment, the device 1 comprises at least a first one-way valve 23 arranged along the connecting channel 28 and adapted to prevent the flow of the work fluid from the main line 2 to the secondary line 3. At least a second one-way valve 29 is also provided and arranged along the main line 2 upstream of the connecting channel 28 and adapted to prevent the flow of the work fluid from the connecting channel itself to the source supplying the work fluid along the main line 2. More particularly, the second one-way valve 29 is arranged upstream (with reference to the direction of forward movement of the work fluid along the first line 6) of the interconnection area between the main line 2 and the connecting channel 28. Suitably, the device 1 also comprises at least a third one-way valve 30 arranged along the secondary line 3 and adapted to prevent the flow of the work fluid from the second line 7 to the accumulator 14. More particularly, the third one-way valve 30 is arranged upstream (with reference to the direction of forward movement of the work fluid along the second line 7) of the second valve means 12, so as to prevent that a rapid drop in pressure along the first line 6 recalls the work fluid from the second line 7, thus causing the unwanted actuation of the automatic and/or parking brake of the trailer.

The operation of the present invention is as follows.

When the towing vehicle is switched on, the first valve means 10 are in home position, so the pressure along the first line 6 is substantially equal to zero.

The third and the fourth valve means 15 and 16 are, initially, in the home position and in the recharging position respectively.

At the same time, the supply source of the work fluid is pressurized, causing the third valve means 15 to move towards the first priority position. This involves the work fluid passing along the intermediate line 17 and, through it, towards the accumulator 14, which is thus filled.

In the event of the third valve means 15 moving to the second priority position and of the service line 21 requiring pressure, the intermediate line 17 is also pressurized and is therefore able to charge the accumulator 14 through the recharging line 18.

When the solenoid valve 13d is commanded, the piloting valve 13b moves from the inactive position to the active position, thus placing the second line 7 in communication with the secondary line 3.

Due to the pressure present along the secondary line 3, the second valve means 12 move from the emergency position to the normal operating position, thus allowing the work fluid present in the accumulator 14 and that coming from the recharging line 18 to flow along the second line 7 and thus release the automatic and/or parking brake of the trailer. The presence of the accumulator 14 therefore makes it possible to supply, in a short time, the flow rate of the work fluid required to release the automatic and/or parking brake of the trailer.

The fourth valve means 16 remain in the recharging position until the pressure along the secondary line 3 reaches a predefined value and such that the pressure present along the fourth piloting channel 22a exceeds the force applied by the fourth elastic means 22b, at which point the fourth valve means move towards the stop position.

Conveniently, the calibration value of the fourth elastic means 22b is close to the maximum pressure allowed by regulations and is equal to 35 bar.

This occurs, for example, when the accumulator 14 is charged and the pressure of the work fluid along the second line 7 has caused the deactivation of the automatic and/or parking brake of the trailer.

When the automatic and/or parking brake of the trailer is deactivated, the fourth valve means 16 remain in the recharging position until the accumulator 14 is fully recharged, after which the pressure along the fourth piloting channel 22a increases until the fourth valve means themselves are moved to the stop position.

In the event of the pressure along the main line rising further, and therefore also the thrust applied by the third piloting channel 19a on the third valve means 15, the latter would move further to the second priority position in such a way that part of the work fluid flow rate flows towards the service line 21.

The third valve means 15 return to the home position the instant the pressure along the load sensing channel 19b reaches a predefined value such as, added to the force applied by the third elastic means 19e, to exceed the force applied on same third valve means 15 by the third piloting channel 19a.

When the service braking of the towing vehicle is applied, the pressure along the first piloting channel 11a increases accordingly, thus causing the first valve means 10 to move from the home position towards the braking position.

After the first valve means 10 have reached the braking position, the work fluid coming from the main line 2 flows along the first line 6 and consequently the service braking of the trailer is activated.

This operating condition also involves an increase in pressure along the counteracting channel 11c, so the first valve means 10 are in an unstable balancing position in which the passage section of the work fluid from the main line 2 towards the first line 6 increases or decreases depending on the ratio between the forces acting on the first valve means themselves, and along the load sensing channel 19b.

In the second embodiment shown in Figure 2 and described above, the accumulator 14, thanks to the connecting channel 28, allows supplying, in case of need, an increase in the flow rate of the work fluid towards the first line 6, thus obtaining a fast response of the service braking of the trailer.

It has in practice been ascertained that the described invention achieves the intended objects and, in particular, the fact is underlined that the device to which the present invention refers, thanks to the presence of the accumulator, of the third and fourth valve means, allows quickly deactivating the automatic and/or parking brake of the trailer, following the connection with the relative towing vehicle, also in the case of towing vehicles provided with small-sized supply pumps and, therefore, not able to supply enough fluid flow rate to supply the service braking of the trailer and deactivate the relative automatic and/or parking brake.

In the second described embodiment, furthermore, the accumulator also makes it possible to reduce the response time of the service braking of the trailer following the braking of the towing vehicle.

## Claims

1. Device (1) for controlling the braking of a trailer, comprising:
- at least one main line (2) connectable to a source of a work fluid at a first pressure;
- at least one secondary line (3) separated from said main line (2);
- at least one discharge line (4) of the work fluid;
- at least one first line (6) connectable to the braking system of the trailer;
- at least one second line (7) connectable to the automatic and/or parking brake of the trailer;
- first valve means (10) operable between a home position, in which said first line (6) is placed in communication with said discharge line (4), and a braking position, in which said first line (6) is placed in communication with said main line (2);
- first piloting means (11) comprising at least a first piloting channel (11a) connectable to the braking system of a towing vehicle and actuating on the first valve means (10) to displace them from the home position to the braking position;
- second valve means (12) operable between a normal operating position, in which said second line (7) is placed in communication with said secondary line (3), and an emergency position, in which said second line (7) is placed in communication with said discharge line (4);
**characterized by** the fact that it comprises at least one accumulator (14) of the work fluid connected to said secondary line (3), and at least third and fourth valve means (15, 16) arranged in sequence with each other and interposed between said main line (2) and said secondary line (3), between said third and fourth valve means (15, 16) being interposed at least one intermediate line (17), wherein said third valve means (15) are operable between at least one home position, in which said main line (2) is isolated from said intermediate line (17), and at least one first priority position, in which said main line (2) is placed in communication with said intermediate line (17), and wherein said fourth valve means (16) are operable between at least one recharging position, in which said intermediate line (17) is placed in communication with said secondary line (3) for recharging said accumulator (14), and at least one stop position, in which said intermediate line (17) is isolated from said secondary line (3).

2. Device (1) according to claim 1, **characterized by** the fact that it comprises second piloting means (13) comprising a second piloting channel (13a) acting on said second valve means (12) to displace them from the emergency position to the normal operating position, and at least one piloting valve (13b) which can be commanded between an inactive position, in which it places said second piloting channel (13a) in communication with said discharge line (4), and at least one active position, in which it places said second piloting channel (13a) in communication with said secondary line (3), said second valve means (12) displacing from the emergency position to the normal operating position as a result of the displacement of said piloting valve (13b) from the inactive position to the active position.

3. Device (1) according to claim 1 or 2, **characterized by** the fact that it comprises third piloting means (19) comprising at least a third piloting channel (19a) communicating with said main line (2) and acting on said third valve means (15) to displace them from the home position to the first priority position, and at least one load sensing channel (19b) acting on said third valve means (15) on the opposite side of said third piloting channel (19a).

4. Device (1) according to claim 3, **characterized by** the fact that said load sensing channel (19b) is connectable to the line having higher pressure between said first line (6) and a further piloting line (19d) communicating with said intermediate line (17) and with said discharge line (4) respectively with said fourth valve means (16) in the recharging position and in the stop position.

5. Device (1) according to claim 4, **characterized by** the fact that it comprises at least one orifice (20a) arranged along said intermediate line (17) to limit the flow of the work fluid to said accumulator (14).

6. Device (1) according to one or more of the preceding claims, **characterized by** the fact that said third valve means (15) have at least a second priority position, subsequent to said first priority position in the displacement from the home position, in which said main line (2) is placed in communication with said intermediate line (17) and with a service line (21) connectable to a further user point.

7. Device (1) according to one or more of the preceding claims, **characterized by** the fact that it comprises fourth piloting means (22) comprising at least a fourth piloting channel (22a) communicating with said secondary line (3) and acting on said fourth valve means (16) to displace them from the recharging position to the stop position.

8. Device (1) according to one or more of the preceding claims, **characterized by** the fact that it comprises at least one connecting channel (28) interposed between said main line (2) and said secondary line (3).

9. Device (1) according to claim 9, **characterized by** the fact that it comprises at least a first one-way valve (23) arranged along said connecting channel (28) and adapted to prevent the flow of the work fluid from said main line (2) to said secondary line (3).

10. Device (1) according to claim 9, **characterized by** the fact that it comprises at least a second one-way valve (29) arranged along said main line (2) upstream of said connecting channel (28) and adapted to prevent the flow of the work fluid from the connecting channel itself to said source of the work fluid.

11. Device (1) according to claim 9 or 10, **characterized by** the fact that it comprises at least a third one-way valve (30) arranged along said secondary line (3) and interposed between said second valve means (12) and said connecting channel (28), said third one-way valve being adapted to prevent the flow of the work fluid from said second line (7) to said first line (6).

## Patentansprüche

1. Vorrichtung (1) zum Steuern der Bremsung eines Anhängers, umfassend:
- mindestens eine Hauptleitung (2), die bei einem ersten Druck mit einer Quelle eines Arbeitsfluids verbindbar ist;
- mindestens eine von der Hauptleitung (2) getrennte sekundäre Leitung (3);
- mindestens eine Abflussleitung (4) des Arbeitsfluids;
- mindestens eine erste Leitung (6), die mit dem Bremssystem des Anhängers verbindbar ist;
- mindestens eine zweite Leitung (7), die mit der automatischen und/oder feststellbaren Bremse des Anhängers verbunden werden kann;
- erste Ventilmittel (10), die zwischen einer Ausgangsposition, in der die erste Leitung (6) in Verbindung mit der Abflussleitung (4) angeordnet ist, und einer Bremsposition, in der die erste Leitung (6) in Verbindung mit der Hauptleitung (2) angeordnet ist, betreibbar sind;
- erste Steuermittel (11), die mindestens einen ersten Steuerkanal (11a) umfassen, der mit dem Bremssystem eines Zugfahrzeugs verbindbar ist und auf die ersten Ventilmittel (10) wirkt, um sie aus der Ausgangsposition in die Bremsposition zu verschieben;
- zweite Ventilmittel (12), die zwischen einer normalen Betriebsposition, in der die zweite Leitung (7) in Verbindung mit der sekundären Leitung (3) angeordnet ist, und einer Notposition, in der die zweite Leitung (7) in Verbindung mit der Druckleitung (4) angeordnet ist, betreibbar sind;
**dadurch gekennzeichnet, dass** sie mindestens einen Akkumulator (14) des Arbeitsfluids umfasst, der mit der sekundären Leitung (3) verbunden ist, und mindestens dritte und vierte Ventilmittel (15, 16), die nacheinander angeordnet und zwischen der Hauptleitung (2) und der sekundären Leitung (3) angeordnet sind, wobei zwischen den dritten und vierten Ventilmitteln (15, 16) mindestens eine Zwischenleitung (17) angeordnet ist, wobei die dritten Ventilmittel (15) zwischen mindestens einer Ausgangsposition, in der die Hauptleitung (2) von der Zwischenleitung (17) isoliert ist, und mindestens einer ersten Prioritätsposition betreibbar sind, in der die Hauptleitung (2) in Verbindung mit der Zwischenleitung (17) gebracht ist, und wobei die vierten Ventilmittel (16) zwischen mindestens einer Ladeposition, in der die Zwischenleitung (17) in Verbindung mit der sekundären Leitung (3) zum Aufladen des Akkumulators (14) gebracht ist, und mindestens einer Stoppposition betreibbar sind, in der die Zwischenleitung (17) von der sekundären Leitung (3) isoliert ist.

2. Vorrichtung (1) nach Anspruch 1, **dadurch gekennzeichnet, dass** sie zweite Steuermittel (13) umfasst, die einen zweiten Steuerkanal (13a) umfassen, der auf die zweiten Ventilmittel (12) wirkt, um sie aus der Notposition in die normale Betriebsposition zu verschieben, und mindestens ein Steuerventil (13b), das zwischen einer inaktiven Position, in der es den zweiten Steuerkanal (13a) in Verbindung mit der Abflussleitung (4) bringt, und mindestens einer aktiven Position gesteuert werden kann, in der es den zweiten Steuerkanal (13a) in Verbindung mit der sekundären Leitung (3) bringt, wobei sich die zweiten Ventilmittel (12) infolge der Verschiebung des Steuerventils (13b) von der inaktiven Position in die aktive Position aus der Notposition in die normale Betriebsposition verschieben.

3. Vorrichtung (1) nach Anspruch 1 oder 2, **dadurch gekennzeichnet, dass** sie dritte Steuermittel (19) umfasst, die mindestens einen dritten Steuerkanal (19a) umfassen, der mit der Hauptleitung (2) in Verbindung steht und auf die dritten Ventilmittel (15) wirkt, um sie aus der Ausgangsposition in die erste Prioritätsposition zu verschieben, und mindestens einen Lasterfassungskanal (19b), der auf die dritten Ventilmittel (15) auf der gegenüberliegenden Seite des dritten Steuerkanals (19a) wirkt.

4. Vorrichtung (1) nach Anspruch 3, **dadurch gekennzeichnet, dass** der Lasterfassungskanal (19b) mit der Leitung mit höherem Druck zwischen der ersten Leitung (6) und einer weiteren Steuerleitung (19d) verbindbar ist, die mit der Zwischenleitung (17) bzw. mit der Abflussleitung (4) mit den vierten Ventilmitteln (16) in der Ladeposition und in der Stoppposition verbunden ist.

5. Vorrichtung (1) nach Anspruch 4, **dadurch gekennzeichnet, dass** sie mindestens eine Öffnung (20a) umfasst, die entlang der Zwischenleitung (17) angeordnet ist, um den Fluss des Arbeitsfluids zu dem Akkumulator (14) zu begrenzen.

6. Vorrichtung (1) nach einem oder mehreren der vorhergehenden Ansprüche, **dadurch gekennzeichnet, dass** die dritten Ventilmittel (15) nach der ersten Prioritätsposition in der Verschiebung von der Ausgangsposition mindestens eine zweite Prioritätsposition aufweisen, in der die Hauptleitung (2) mit der Zwischenleitung (17) und mit einer mit einem weiteren Benutzerpunkt verbindbaren Serviceleitung (21) in Verbindung steht.

7. Vorrichtung (1) nach einem oder mehreren der vorhergehenden Ansprüche, **dadurch gekennzeichnet, dass** sie vierte Steuermittel (22) umfasst, die mindestens einen vierten Steuerkanal (22a) umfassen, der mit der sekundären Leitung (3) in Verbindung steht und auf die vierten Ventilmittel (16) wirkt, um sie aus der Ladeposition in die Stoppposition zu verschieben.

8. Vorrichtung (1) nach einem oder mehreren der vorstehenden Ansprüche, **dadurch gekennzeichnet, dass** sie mindestens einen Verbindungskanal (28) umfasst, der zwischen der Hauptleitung (2) und der sekundären Leitung (3) angeordnet ist.

9. Vorrichtung (1) nach Anspruch 9, **dadurch gekennzeichnet, dass** sie mindestens ein erstes Einwegventil (23) umfasst, das entlang des Verbindungskanals (28) angeordnet und geeignet ist, um den Fluss des Arbeitsfluids von der Hauptleitung (2) zu der sekundären Leitung (3) zu verhindern.

10. Vorrichtung (1) nach Anspruch 9, **dadurch gekennzeichnet, dass** sie mindestens ein zweites Einwegventil (29) umfasst, das entlang der Hauptleitung (2) stromaufwärts des Verbindungskanals (28) angeordnet und geeignet ist, den Fluss des Arbeitsfluids aus dem Verbindungskanal selbst zu der Quelle des Arbeitsfluids zu verhindern.

11. Vorrichtung (1) nach Anspruch 9 oder 10, **dadurch gekennzeichnet, dass** sie mindestens ein drittes Einwegventil (30) umfasst, das entlang der sekundären Leitung (3) angeordnet und zwischen den zweiten Ventilmitteln (12) und dem Verbindungskanal (28) angeordnet ist, wobei das dritte Einwegventil geeignet ist, um den Fluss des Arbeitsfluids von der zweiten Leitung (7) zur ersten Leitung (6) zu verhindern.

## Revendications

1. Dispositif (1) pour contrôler le freinage d'une remorque, comprenant :
- au moins une ligne principale (2) pouvant être raccordée à une source d'un fluide actif à une première pression ;
- au moins une ligne secondaire (3) séparée de ladite ligne principale (2) ;
- au moins une ligne d'évacuation (4) du fluide actif ;
- au moins une première ligne (6) pouvant être raccordée au système de freinage de la remorque ;
- au moins une seconde ligne (7) pouvant être raccordée au frein automatique et/ou de stationnement de la remorque ;
- des premiers moyens de vanne (10) opérationnels entre une position de repos, dans laquelle ladite première ligne (6) est placée en communication avec ladite ligne d'évacuation (4), et une position de freinage, dans laquelle ladite première ligne (6) est placée en communication avec ladite ligne principale (2) ;
- des premiers moyens de pilotage (11) comprenant au moins un premier canal de pilotage (11a) pouvant être raccordé au système de freinage d'un véhicule tracteur et actionnant sur les premiers moyens de vanne (10) pour les déplacer de la position de repos à la position de freinage ;
- des deuxièmes moyens de vanne (12) opérationnels entre une position d'exploitation normale, dans laquelle ladite seconde ligne (7) est placée en communication avec ladite ligne secondaire (3), et une position d'urgence, dans laquelle ladite seconde ligne (7) est placée en communication avec ladite ligne d'évacuation (4) ;
**caractérisé par le fait qu'**il comprend au moins un accumulateur (14) du fluide actif raccordé à ladite ligne secondaire (3), et au moins des troisièmes et quatrièmes moyens de vanne (15, 16) agencés séquentiellement les uns par rapport aux autres et interposés entre ladite ligne principale (2) et ladite ligne secondaire (3), entre lesdits troisièmes et quatrièmes moyens de vanne (15, 16) étant interposée au moins une ligne intermédiaire (17), dans lequel lesdits troisièmes moyens de vanne (15) sont opérationnels entre au moins une position de repos, dans laquelle ladite ligne principale (2) est isolée de ladite ligne intermédiaire (17), et au moins une première position de priorité, dans laquelle ladite ligne principale (2) est placée en communication avec ladite ligne intermédiaire (17), et dans lequel lesdits quatrièmes moyens de vanne (16) sont opérationnels entre au moins une position de recharge, dans laquelle ladite ligne intermédiaire (17) est placée en communication avec ladite ligne secondaire (3) pour recharger ledit accumulateur (14), et au moins une position d'arrêt, dans laquelle ladite ligne intermédiaire (17) est isolée de ladite ligne secondaire (3).

2. Dispositif (1) selon la revendication 1, **caractérisé par le fait qu'**il comprend des deuxièmes moyens de pilotage (13) comprenant un deuxième canal de pilotage (13a) agissant sur lesdits deuxièmes moyens de vanne (12) pour les déplacer de la position d'urgence à la position d'exploitation normale, et au moins une vanne de pilotage (13b) qui peut être commandée entre une position inactive, dans laquelle elle place ledit deuxième canal de pilotage (13a) en communication avec ladite ligne d'évacuation (4), et au moins une position active, dans laquelle elle place ledit deuxième canal de pilotage (13a) en communication avec ladite ligne secondaire (3), lesdits deuxièmes moyens de vanne (12) se déplaçant de la position d'urgence à la position d'exploitation normale par suite du déplacement de ladite vanne de pilotage (13b) de la position inactive à la position active.

3. Dispositif (1) selon la revendication 1 ou 2, **caractérisé par le fait qu'**il comprend des troisièmes moyens de pilotage (19) comprenant au moins un troisième canal de pilotage (19a) communiquant avec ladite ligne principale (2) et agissant sur lesdits troisièmes moyens de vanne (15) pour les déplacer de la position de repos à la première position de priorité, et au moins un canal de détection de charge (19b) agissant sur lesdits troisièmes moyens de vanne (15) du côté opposé audit troisième canal de pilotage (19a).

4. Dispositif (1) selon la revendication 3, **caractérisé par le fait que** ledit canal de détection de charge (19b) peut être raccordé à la ligne ayant une pression plus élevée entre ladite première ligne (6) et une ligne de pilotage supplémentaire (19d) communiquant avec ladite ligne intermédiaire (17) et avec ladite ligne d'évacuation (4) respectivement avec lesdits quatrièmes moyens de vanne (16) dans la position de recharge et dans la position d'arrêt.

5. Dispositif (1) selon la revendication 4, **caractérisé par le fait qu'**il comprend au moins un orifice (20a) agencé le long de ladite ligne intermédiaire (17) pour limiter l'écoulement de fluide actif vers ledit accumulateur (14).

6. Dispositif (1) selon une ou plusieurs des revendications précédentes, **caractérisé par le fait que** lesdits troisièmes moyens de vanne (15) ont au moins une deuxième position de priorité, en aval de ladite première position de priorité dans le déplacement depuis la position de repos, dans laquelle ladite ligne principale (2) est placée en communication avec ladite ligne intermédiaire (17) et avec une ligne de service (21) pouvant être raccordée à un point utilisateur supplémentaire.

7. Dispositif (1) selon une ou plusieurs des revendications précédentes, **caractérisé par le fait qu'**il comprend des quatrièmes moyens de pilotage (22) comprenant au moins un quatrième canal de pilotage (22a) communiquant avec ladite ligne secondaire (3) et agissant sur lesdits quatrièmes moyens de vanne (16) pour les déplacer de la position de recharge à la position d'arrêt.

8. Dispositif (1) selon une ou plusieurs des revendications précédentes, **caractérisé par le fait qu'**il comprend au moins un canal de raccordement (28) interposé entre ladite ligne principale (2) et ladite ligne secondaire (3).

9. Dispositif (1) selon la revendication 9, **caractérisé par le fait qu'**il comprend au moins une première vanne unidirectionnelle (23) agencée le long dudit canal de raccordement (28) et adaptée pour empêcher l'écoulement du fluide actif de ladite ligne principale (2) à ladite ligne secondaire (3).

10. Dispositif (1) selon la revendication 9, **caractérisé par le fait qu'**il comprend au moins une deuxième vanne unidirectionnelle (29) agencée le long de ladite ligne principale (2) en amont dudit canal de raccordement (28) et adaptée pour empêcher l'écoulement du fluide actif du canal de raccordement lui-même à ladite source du fluide actif.

11. Dispositif (1) selon la revendication 9 ou 10, **caractérisé par le fait qu'**il comprend au moins une troisième vanne unidirectionnelle (30) agencée le long de ladite ligne secondaire (3) et interposée entre lesdits deuxièmes moyens de vanne (12) et ledit canal de raccordement (28), ladite troisième vanne unidirectionnelle étant adaptée pour empêcher l'écoulement du fluide actif de ladite seconde ligne (7) à ladite première ligne (6).
